(19) Europäisches Patentamt / European Patent Office / Office européen des brevets

(11) **EP 2 270 458 B1**

(12) **EUROPÄISCHE PATENTSCHRIFT**

(45) Veröffentlichungstag und Bekanntmachung des Hinweises auf die Patenterteilung:
**06.06.2012 Patentblatt 2012/23**

(51) Int Cl.:
***G01M 3/20*** *(2006.01)*

(21) Anmeldenummer: **10171475.6**

(22) Anmeldetag: **24.08.2005**

(54) **Verfahren und Gerät zur Lecksuche**

Method and device for detecting leaks

Procédé et appareil de détection de fuites

(84) Benannte Vertragsstaaten:
**DE FR GB**

(30) Priorität: **16.10.2004 DE 102004050762**

(43) Veröffentlichungstag der Anmeldung:
**05.01.2011 Patentblatt 2011/01**

(62) Dokumentnummer(n) der früheren Anmeldung(en) nach Art. 76 EPÜ:
**05779865.4 / 1 800 102**

(73) Patentinhaber: **Inficon GmbH**
**50968 Köln (DE)**

(72) Erfinder:
• **Liebich, Jörn**
  **51145, Köln (DE)**
• **Rolff, Randolf**
  **50169, Kerpen-Horrem (DE)**

• **Kilian, Ralf**
  **50999, Köln (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**EP-A1- 0 742 429     DE-A1- 4 326 264**
**DE-A1- 19 735 250     JP-A- 2003 232 826**
**US-A- 3 581 195     US-A- 4 369 661**
**US-A- 5 889 199     US-A1- 2001 006 003**
**US-B1- 6 286 362**

• **ALKHIMOV D D; STRUKOV N I: "Leak detector for fluid containers using test gas - has automatic output signal zero setting circuit to compensate for gradually increasing background noise" DERWENT, 18. Februar 1982 (1982-02-18), XP002366353**

**Beschreibung**

Die Erfindung betrifft ein Verfahren zur Lecksuche, wobei Gas abgesaugt und das Vorhandensein von Testgas in dem abgesaugten Gas festgestellt wird.

Kleinste Leckraten eines Behälters können nach der Vakuum-Methode zuverlässig festgestellt werden. Je kleiner die Leckrate ist, umso größer sind die Anforderungen an Sauberkeit und Endvakuum. Bei einer lokalen Lecksuche wird mit einer Vakuumpumpe der Behälter so weit evakuiert, bis der für den Leckdetektor notwendige Prüfdruck erreicht ist. Leckverdächtige Stellen des Behälters werden dann außen mit einem feinen Testgasstrahl abgesprüht. In den Behälter eindringendes Testgas wird von der Vakuum-Pumpvorrichtung abgepumpt und von einem Massenspektrometer erkannt.

Als Testgas für Lecksuchgeräte wird häufig Helium verwendet. Eine Schwierigkeit besteht in der eingeschränkten Selektivität des Massenspektrometers. An Behältern für die Leckmessung setzt sich sowohl außen als auch innen Wasser ab. Die $H_2$-Komponente von Wasser beinhaltet auch Anteile, deren Anwesenheit die Messung von Helium empfindlich stören. Zu Beginn des Abpumpens überlagert sich dem Mengensignal, das eigentlich nur die Menge des Testgases repräsentieren soll, eine Störgröße, die durch die Anwesenheit von Wasser oder anderer Verunreinigungen erzeugt wird. Die Störgröße klingt mit zunehmender Pumpzeit ab, um sich asymptotisch einer horizontalen Linie anzunähern. Den Wert Null erreicht diese Linie aber niemals, weil ein absolutes Vakuum ebenso wenig erreicht werden kann, wie eine absolute Leckfreiheit. Es ist daher eine Frage der jeweiligen Anwendung, welcher Bereich der abklingenden Mengenstromkurve für die Leckmessung ausgewählt wird.

Da die Kurve des Mengensignals mit zunehmender Pumpzeit abklingt, wird das plötzliche Auftreten von Testgas, das einen Anstieg der Kurve des Mengensignals hervorruft, von dem abklingenden Untergrundsignal überlagert. Wenn sich das Untergrundsignal in einem größeren Maße verringert als das Detektionssignal sich aufbaut, wird ein Detektionssignal überhaupt nicht festgestellt. Das entsprechende Leck wird vom Lecksuchgerät nicht erkannt; es bleibt unsichtbar.

Es wurde bereits vorgeschlagen, ein Lecksuchgerät mit einer Zero-Funktion auszustatten. Dabei ist das Gerät mit einer Zero-Taste versehen, die vom Benutzer gedrückt werden kann, um von dem gegenwärtigen Signal das zuvor aufgetretene Signal zu subtrahieren. Auf diese Weise wird die Signalamplitude auf Null gesetzt. Wenn anschließend das weiter abklingende Untergrundsignal sich in stärkerem Maße verringert, als das Mengensignal infolge des Lecks zunimmt, resultiert ein negatives Signal, in welchem der durch das Leck verursachte Signalanstieg weder erkennbar noch messbar ist.

Bei den bisher üblichen Verfahren kann der Benutzer die Zero-Taste jederzeit drücken, wobei das Untergrundsignal auf Null gesetzt wurde. Die Folge ist dann, dass eine scheinbar niedrige Leckrate angezeigt wird, während die tatsächliche Leckrate höher ist. Eine derartige Betriebsweise kann fatale Folgen haben. Wichtig ist, dass keine Leckrate verborgen bleibt. Eine zu viel angezeigte Leckrate hingegen ist weniger problematisch.

EP 0 742 429 A1 offenbart ein Verfahren und ein Gerät zur Lecksuche mit einer Hochvakuumvorrichtung, inklusive Vakuumanschluß, zum Absaugen von Gas; einem Massenspektrometer, einschließlich Prüfgassensor, zur Feststellung von Testgas in dem abgesaugten Gas und Erzeugung eines Mengensignals q, das der gemessenen Leckrate entspricht; und einer Differentialschaltung, die durch Differentialbildung des Mengensignals dq/dt einen Signalunruhewert ermittelt, womit eine untere Grenze bestimmt wird.

Ein Verfahren bzw. ein Lecksuchgerät nach US-A-5,681,983 weist ein an eine Vakuumpumpe angeschlossenes Massenspektrometer auf, welches einen Testgasdetektor bildet. Der Testgasdetektor enthält ferner eine Differenzierschaltung, die die zeitliche Ableitung des Mengensignals dq/dt bildet. Das Messsignal wird erhalten, indem das Mengensignal q mit einem Signal q' summiert wird, welches durch die Differentialbildung erhalten wurde.

US-A-5,786,529 beschreibt einen Testgasdetektor mit einer Vakuumpumpe, die als Adsorptionspumpe ausgebildet ist und einem Massenspektrometer. Eine Auswerteschaltung enthält eine Differenzierstufe und einen Operationsverstärker. Die Ausgangsspannung der Differenzierstufe ist gleich der zeitlichen Ableitung des von dem Massenspektrometer gelieferten Stromes. Die Differenzierschaltung enthält einen Rückkopplungszweig, der eingeschaltet werden kann, um den ständig steigenden Messstrom rückzusetzen. Die Einschaltung des Rückkopplungszweiges erfolgt spannungsabhängig.

Patent Abstracts of Japan vol. 2003, no. 12, 5 December 2003 (2003-12-05) & JP 2003 232826 A (KAWAMURA ELECTRIC INC), 22 August 2003 (2003-08-22) beschreibt einen Leckdetektor, die• verschiedene Tiefpassfilter, eine Differentialschaltung und einen Nulldurchgangsdetektor enthält. Ein Schaltelement tastet mit Hilfe des Nulldurchgangssignals das Ausgangssignal des ersten Tiefpassfilters und bearbeitet den Abtastwert so, dass die Größe des Leckstroms entsteht.

DATABASE WPI Section E1, Week 198250 Derwent Publications Ltd., London, GB; Class S02, AN 1982-B1536J XP002366353 ALKHIMOV DD ET AL.: "Leak detector for fluid containers using test gas" & SU 905 685 A (AUTOM GAS ANALYSIS) 15 February 1982 (1982-02-15) beschreibt einen Leckgasdetektor mit einer Schnüffelsonde. Während der Lecksuche wird eine Zero-Einstellschaltung betätigt, die eine Signalkorrektur bewirkt. Der Einfluss dieser Signalkorrektur ist proportional zu der Größe des Lecks und der Messzeit.

US-A-4,369,661 beschreibt eine automatische Nullungsschaltung für transiente Druckänderungen eines Lecksuchgeräts. Ein druckempfindliches Element mit variabler Impedanz ist an eine Brückenschaltung angeschlossen. Die Nullungsschaltung erzeugt ein Ausgangssignal nur bei kurzzeitigen Signaländerungen in der Rate der Druckänderung, wie sie beim Testen auf kleine Lecks auftreten.

Der Erfindung liegt die Aufgabe zugrunde, ein Verfahren zur Lecksuche anzugeben, bei dem die Lekkerkennungssicherheit vergrößert ist.

Das erfindungsgemäße Verfahren ist im Patentanspruch 1 angegeben. Dabei wird die Signalunruhe des Messignals ermittelt und ausgewertet. Die Signalunruhe ist die Veränderung des Sinaluntergrunds pro Zeiteinheit. Das Mengensignal wird durch die Erzeugung des Befehlssignals, das üblicherweise als Zero-Signal bezeichnet wird, nicht auf Null gesetzt, sondern lediglich bis auf eine untere Anzeigegrenze reduziert, so dass der erhaltene Signalwert immer noch positiv ist. Die untere Anzeigegrenze gibt an, wie weit ein Leck erfasst werden kann. Es erfolgt keine Sperrung der Funktion des Zero-Signals. Wenn die ermittelte Leckrate über der unteren Anzeigegrenze liegt, wird sie angezeigt; anderenfalls nicht. Das Verfahren arbeitet nicht mit einem Null-Niveau. Es wird ermittelt, bis zu welcher Signalunruhe welche Leckrate noch hinreichend gut messbar ist. Es wird also automatisch angegeben, welche Empfindlichkeit das Gerät zu dem Zeitpunkt hat, zu dem das Zero-Signal durch Drücken der Zero-Taste erzeugt worden ist.

Erfindungsgemäß wird die Zero-Funktion für den Benutzer des Gerätes gesperrt. Die Freigabe der Zero-Funktion erfolgt erst, wenn das Gerät infolge der Signalberuhigung des Mengensignals Leckraten, die dem eingegebenen Trigger-Wert entsprechen, zuverlässig messen kann.

Die Erfindung betrifft ferner ein entsprechendes Lecksuchgerät gemäß Anspruch 5.

Im Folgenden werden unter Bezugnahme auf die Zeichnungen Ausführungsbeispiele der Erfindung näher erläutert.

Es zeigen:

Figur 1    eine Prinzipzeichnung eines Lecksuchgeräts, das nach dem erfindungsgemäßen Verfahren arbeitet,

Figur 2    ein Blockdiagramm der ersten Variante des Verfahrens,

Figur 3    ein Zeitdiagramm des Mengensignals bei der ersten Variante,

Figur 4    ein Blockdiagramm der zweiten Variante, und

Figur 5    ein Zeitdiagramm des Mengensignals bei der zweiten Variante.

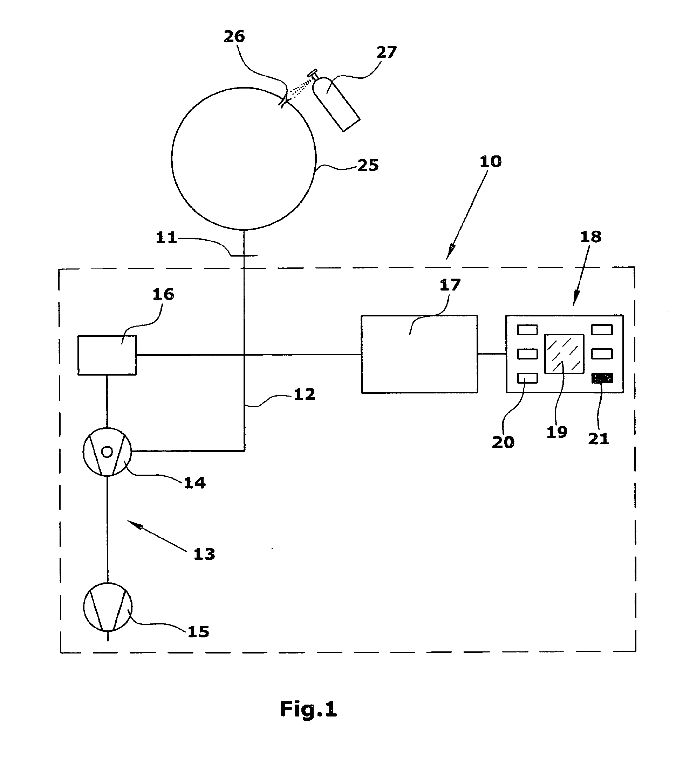

Das Lecksuchgerät 10 nach Figur 1 weist einen Einlassflansch 11 auf, an den der zu prüfende Behälter angeschlossen wird. Vom Einlassflansch 11 führt eine Leitung 12 zu der Vakuum-Pumpvorrichtung 13. Diese besteht aus einer Turbomolekularpumpe 14 und einer dieser nachgeschalteten Vorvakuumpumpe 15. Die Leitung 12 ist an einen Seiteneinlass der Turbomolekularpumpe 14 angeschlossen, deren Eintrittsseite mit einem Massenspektrometer 16 verbunden ist. In der Turbomolekularpumpe 14 gelangt das im angesaugten Gas enthaltene Testgas, z.B. Helium, im Gegenstrom zur Förderrichtung in das Massenspektrometer 16, um identifiziert zu werden. Das Massenspektrometer 16 liefert das Mengensignal, das die erkannte Testgasmenge repräsentiert, an einen Mikrocomputer 17, der die nachfolgend noch erläuterte Bearbeitung ausführt. Der Mikrocomputer ist mit einer Bedieneinheit 18 verbunden, die eine Anzeigevorrichtung 19, beispielsweise einen Bildschirm, eine Eingabevorrichtung 20 mit verschiedenen Tasten und einer Zero-Taste 21 enthält.

An den Einlassflansch 11 wird der zu prüfende Behälter 25 angeschlossen, der ein (ungewolltes) Leck 26 aufweist. Das Leck wird mit Testgas, z.B. Helium, aus einer Sprühpistole 27 angesprüht. Das Testgas, das in den Behälter 25 eintritt, gelangt über die Turbomolekularpumpe 14 zum Massenspektrometer 16. Die Menge des Testgases wird als Mengensignal MS an der Anzeigevorrichtung 19 in Form einer Kurve und/oder als numerischer Wert angezeigt.

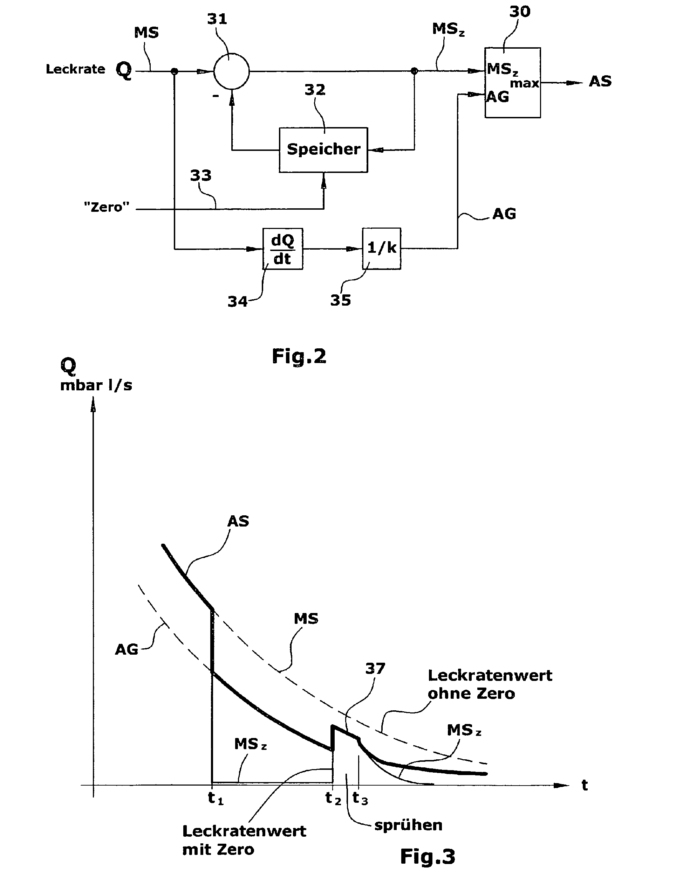

Zu Beginn des Absaugens hat das Mengensignal MS gemäß Figur 3 einen relativ hohen Wert. Während des Absaugens klingt das Mengensignal MS asymptotisch ab. Der hohe Wert des Mengensignals ist auf Wasser und andere Verunreinigungen, sowie auch Helium-Restmengen, die im abgesaugten Gas enthalten sind, zurückzuführen. Das Mengensignal MS hat somit eine fremdbeeinflusste Drift, wobei die Fremdeinflüsse das Messsignal weit übersteigen können. Die Darstellung des Mengensignals MS entlang der Koordinate in Figur 3 ist logarithmisch nach Zehnerpotenzen aufgebaut. Das im Anfangsbereich der Kurve dargestllte Mengensignal MS ergibt sich ohne das Vorhandensein eines Lecks. Es bildet den Signaluntergrund, auf dem ein Leck noch erkannt werden soll.

Figur 2 zeigt den Aufbau eines Ausführungsbeispiels der Auswerteschaltung, bzw. der Verarbeitung im Mikrocomputer 17. Hierbei wird das Mengensignal MS, das die Leckrate Q angeben soll, über einen Subtrahierer dem einen Eingang eines Maximalwertselektors 30 zugeführt. Der Subtrahierer 31 empfängt in seinem Subtraktionseingang das Signal eines Speichers 32, der an den Ausgang des Subtrahierers 31 angeschlossen ist. Der Speicher wird durch ein "Zero"-Signal an Leitung 33 in der Weise aktiviert, dass er einen Subtraktionsvorgang einleitet, bei dem das Ausgangssignal des Subtrahierers 31 von dem Mengensignal MS subtrahiert wird. Dadurch entsteht das reduzierte Mengensignal $MS_z$, das dem einen Eingang des Maximalwertselektors 30 zugeführt wird. Im Subtrahierer 31 wird die gesamte Höhe des Mengensignals subtrahiert, wobei sich der Wert $MS_z$ von Null ergibt.

Das Mengensignal MS wird außerdem einer Differentialschaltung 34 zugeführt, die aus der Leckrate Q ein Signal $\frac{dQ}{dt}$ der Signalunruhe bildet. Dieses Signal ist die Ableitung der Leckrate nach der Zeit. Es ist umso größer, je steiler der Abfall des Mengensignals MS ist (Figur 3). Das Signal der Differentialschaltung 34 wird mit einer Konstanten 1/k multipliziert. Daraus wird die untere Anzeigegrenze AG ermittelt. Der Wert von AG wird dem zweiten Eingang des Maximalwertselektors 30 zugeführt. Aus den beiden Eingangsgrößen $MS_z$ und AG wählt der Maximalwertselektor den größten aus. Dieser wird an der Anzeigevorrichtung als Anzeigesignal AS zur Anzeige gebracht.

Figur 3 zeigt den Verlauf des Anzeigesignals AS, also des Verlaufs mit Drücken der Zero-Taste. In Figur 3 sei angenommen, dass zum Zeitpunkt $t_1$ die Zero-Taste 21 gedrückt wird, um eine Leckerkennung vorzubereiten. Kurz danach wird mit der Sprühpistole 27 Testgas gegen den Behälter 25 gesprüht. Das Ansprühen geschieht zum Zeitpunkt $t_2$ und endet zum Zeitpunkt $t_3$.

Man erkennt, dass das vom Maximalwertselektor 30 erzeugte Anzeigesignal AS zum Zeitpunkt $t_1$ auf den Wert der Anzeigegrenze AG abfällt, weil von dem Zeitpunkt $t_1$ an die Anzeigegrenze AG größer ist als das dann durch den Subtrahierer 31 erzeugte Mengensignal $MS_z$. Wenn zum Zeitpunkt $t_2$ ein Ansprühen des Lecks erfolgt, erhöht sich durch das Ansprühen das Messsignal über die Anzeigegrenze AG hinaus, so dass ein Impuls 37 entsteht, der allerdings bereits während des Sprühens entsprechend der allgemeinen Drift abklingt und schließlich wieder auf der Kurve der Anzeigegrenze AG endet. Der Impuls 37 ist innerhalb der Kurve des Anzeigesignals AS deutlich identifizierbar und somit als Leck erkennbar.

Nach einiger Zeit kann der Vorgang der Aktivierung der Zero-Taste wiederholt werden, um anschließend wiederum den Behälter anzusprühen. Es erfolgt eine Festlegung und Anzeige der unteren Anzeigegrenze AG, die an der Anzeigevorrichtung angezeigt wird. Ein Leck ist anhand der Änderung des angezeigten Wertes von AG auf einen höheren Wert, entsprechend dem Impuls 37, erkennbar. An der Anzeigevorrichtung wird also ständig die untere Anzeigegrenze AG angegeben, bei welcher eine Leckrate noch hinreichend gut anzeigbar ist. Der Benutzer kann also bei Anzeige einer gewünschten Anzeigegrenze AG eine Leckerkennung mit der zuvor angezeigten Empfindlichkeit durchführen.

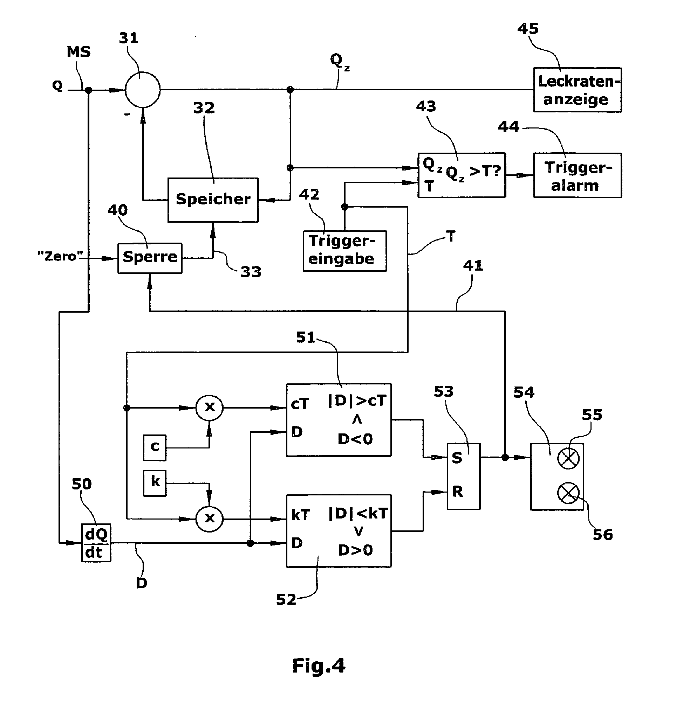

Figur 4 zeigt ein Ausführungsbeispiel der zweiten Variante. Die gemessene Leckrate Q wird auch hier als Mengensignal MS einem Subtrahierer 31 zugeführt. Der Ausgang des Subtrahierers ist über einen Speicher 32 mit dem Subtraktionseingang des Subtrahierers verbunden. Die Signalausgabe aus dem Speicher 32 wird durch ein Signal an einer Leitung 33 veranlasst. Das an einer Zero-Taste eingegebene Zero-Signal wird einer Sperre 40 zugeführt, die das Signal für Leitung 33 erzeugt. Die Sperre 40 wird von einem Signal an einer Leitung 41 aktiviert.

An einer Trigger-Eingabe 42, bei der es sich um die Eingabevorrichtung 20 von Figur 1 handeln kann, wird vom Benutzer ein Trigger-Wert T in mbar * l/s eingegeben. Der Trigger-Wert stellt zunächst einen Grenzwert dar, dessen Überschreitung ein "zu großes" Leck angibt.

Der Wert $Q_z$, den die gemessene Leckrate nach dem Aktivieren der Zero-Funktion eingenommen hat, wird dem einen Eingang eines Komparators 43 zugeführt. Der andere Eingang des Komparators empfängt den Trigger-Wert T. Der Komparator 43 erzeugt ein Ausgangssignal, wenn $Q_z > T$ ist. Dieses Ausgangssignal aktiviert den Trigger-Alarm 44, der angibt, dass das Mengensignal größer ist als der eingegebene Trigger-Wert und somit den Grenzwert überschreitet. Dies bedeutet die Erkennung eines Lecks. Die Größe des Lecks wird an der Leckratenanzeige 45 angezeigt, die das Signal $Q_z$ empfängt.

Das Mengensignal MS, das die Leckrate Q repräsentiert, wird einer Differentialschaltung 50 zugeführt, die den Differentialquotienten $\frac{dQ}{dt}$ bildet. Das Ausgangssignal D der Differentialschaltung 50 gibt die Signalunruhe der Leckrate Q an, also die (negative) Steigung des zeitlichen Verlaufs des Mengensignals. Das Signal D wird zwei Logikschaltungen 51 und 52 zugeführt. Die erste Logikschaltung 51 liefert ein Ausgangssignal, wenn folgende Bedingung erfüllt ist

$$(D < 0) \wedge (|D| > c * T).$$

Die zweite Logikschaltung 52 erzeugt ein Ausgangssignal, wenn die folgende Bedingung erfüllt ist

$$(D > 0) \vee (|D| < k * T).$$

Hierin ist

D: die Signalunruhe in mbar * l/s pro Minute

T: der eingestellte Trigger-Wert in mbar * l/s

c, k: Konstanten mit c > k.

Über die Wahl der Konstanten c und k kann die Mindestdauer vorgegeben werden, die ein Leck der Größe T für den Benutzer sichtbar ist, bevor es durch die negative Drift des Leckratensignals wieder "unsichtbar" wird. Dabei muss c > k sein, damit eine Hysterese zwischen "Sperren" und "Freigeben" der Zero-Funktion gegeben ist. Diese Funktion verhindert eine Fehlbedienung der Zero-Funktion und stellt sicher, dass Lecks in der Größe des eingestellten Trigger-Werts vom Benutzer erkannt werden.

Die Ausgangssignale der Logikschaltung 51 und 52 steuern ein Flipflop 53, an dessen Ausgang die Leitung 41 angeschlossen ist, welche die Sperre 40 steuert. Das Signal der Logikschaltung 51 steuert den Setzeingang S und das Signal der Logikschaltung 52 steuert den Rücksetzeingang R des Flipflops 53. Der Ausgang des Flipflops ist mit einer Anzeigevorrichtung 54 verbunden, die zwei verschiedenfarbige Leuchten 55,56 aufweist. Die Leuchte 55 leuchtet, wenn die Zero-Funktion freigegeben ist und die Leuchte 56 leuchtet, wenn die Zero-Funktion gesperrt ist.

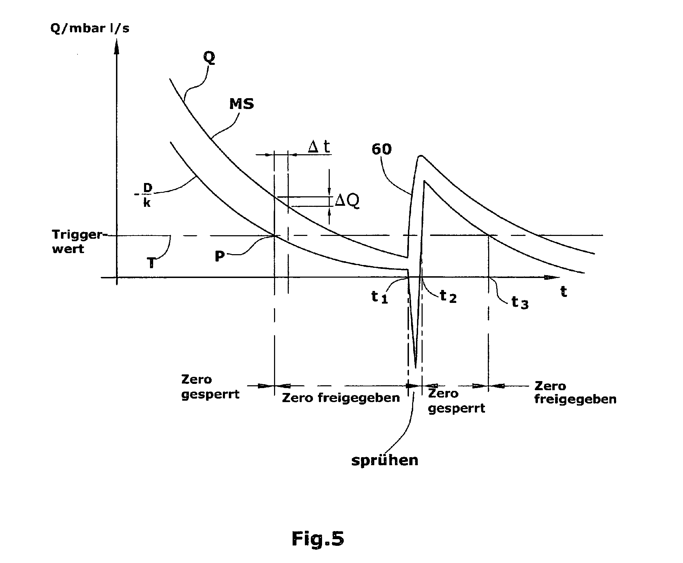

Figur 5 zeigt den zeitlichen Ablauf der Leckrate Q, die das Mengensignal MS bildet. Die Darstellung des Mengensignals MS ist auch in Figur 5 logarithmisch nach Zehnerpotenzen aufgebaut. Aus der Leckrate Q wird die Signalunruhe D ermittelt, die skaliert als Kurve $-\dfrac{D}{k}$ ebenfalls in Figur 5 eingetragen ist. Im Punkt P schneidet die Kurve $-\dfrac{D}{k}$ den Trigger-Wert T. Dies bedeutet, dass durch die Sperre 40 in Figur 4 die Zero-Funktion freigegeben wird. Die Anzeigeleuchte 55 leuchtet. Der Benutzer kann nun manuell das Zero-Signal erzeugen. Vom Zeitpunkt $t_1$ bis zum Zeitpunkt $t_2$ sprüht der Benutzer mit der Sprühpistole 27 Testgas gegen das Leck. Dies führt zu einem positiven Anstieg 60 des Mengensignals. Vom Zeitpunkt $t_2$ an wird die Zero-Funktion gesperrt. Sobald das Signal D wieder den eingestellten Trigger-Wert T von oben nach unten passiert, wird vom Zeitpunkt $t_3$ die Zero-Funktion wieder freigegeben. In Figur 5 ist die Hysterese, die durch die Konstanten c und k hervorgerufen wird, aus Gründen der Übersichtlichkeit nicht dargestellt.

Der Signalanstieg 60 zeigt ein erkanntes Leck an.

Die Variante nach den Figuren 4 und 5 basiert darauf, dass festgestellt wird, ob die Leckrate in Höhe des gewünschten Trigger-Wertes T noch messbar ist. Ist sie messbar, so erfolgt eine Freigabe der Zero-Funktion; ist sie nicht messbar, erfolgt eine Sperrung der Zero-Funktion.

Bei den vorstehend beschriebenen Ausführungsbeispielen wird jeweils Gas aus einem Behälter abgesaugt, um dieses Gas auf Testgas zu überprüfen. Abweichend hiervon ist die Erfindung auch bei der Schnüffellecksuche anwendbar, bei der ein Leck dadurch aufgespürt wird, dass eine ansaugende Schnüffelsonde an der zu prüfenden Stelle Umgebungsluft einzieht.

**Patentansprüche**

1. Verfahren zur Lecksuche mit folgenden Schritten:

   - Absaugen von Gas,
   - Feststellen von Testgas in dem abgesaugten Gas, und Erzeugung eines Mengensignals (MS), das der gemessenen Leckrate (Q) entspricht,
   - Ermittlung der Signalunruhe ($\dfrac{dQ}{dt}$) des Mengensignals als Ableitung der gemessenen Leckrate nach der Zeit,

   **gekennzeichnet durch** die weiteren Schritte

   - Verarbeitung des Mengensignals (MS) in der Weise, dass bei Erzeugung eines Zero-Signals eine Reduzierung des Mengensignals erfolgt,
   - Bestimmen einer unteren Anzeigegrenze (AG) anhand der ermittelten Signalunruhe,
   - Anzeigen eines Lecks nur dann, wenn das Mengensignal (MS) die untere Anzeigegrenze (AG) übersteigt.

2. Verfahren zur Lecksuche nach Anspruch 1, wobei die Ermittlung der Signalunruhe ($\dfrac{dQ}{dt}$) durch Differentialbildung des Mengensignals (MS) erfolgt.

3. Verfahren zur Lecksuche nach Anspruch 1 oder 2, wobei die Signalunruhe durch einen Quotienten (k) geteilt wird, um die Anzeigegrenze (AG) zu erhalten.

4. Verfahren zur Lecksuche nach einem der Ansprüche 1 bis 3, bei welchem das Maximum aus Leckrate (Q) und Anzeigegrenze (AG) einer Leckratenanzeige zugeführt wird.

5. Lecksuchgerät mit einem Vakuumanschluss (11), einer mit dem Vakuumanschluss verbundenen Hochvakuumpumpvorrichtung (13), einem Prüfgassensor (16), der ein Mengensignal (MS) liefert, und einer Differentialschaltung (34), die aus dem Mengensignal einen Signalunruhewert erzeugt, **dadurch gekennzeichnet,** **dass** das Lecksuchgerät einen Mikrocomputer (17) und eine Bedienvorrichtung (18) aufweist, die eine Anzeigevorrichtung (19) und eine Eingabevorrichtung (21) für ein Zero-Signal zur Reduzierung des von dem Prüfgassensor gelieferten Mengensignals enthält, **dadurch gekennzeichnet, dass** aus dem Signalunruhewert eine untere Anzeigegrenze (AG) ermittelt wird, und dass die Anzeigevorrichtung (19) einen Maximalwertselektor (30) enthält, der aus dem reduzierten Mengensignal (MS) und der Anzeigegrenze (AG) einen Maximalwert selektiert, wobei die Anzeigevorrichtung (19) eine von der Anzeigegrenze abweichende Leckrate nur dann anzeigt, wenn das reduzierte Mengensignal (MS) die Anzeigegrenze (AG) übersteigt.

**Claims**

1.  A leak detection method comprising the following steps:

    - drawing off gas,
    - detecting test gas in the gas drawn off, and generating a quantity signal (MS) corresponding to the measured leak rate (Q),
    - calculating signal dithering ($\frac{dQ}{dt}$) of the quantity signal as a derivative of the measured leak rate with respect to time,

    **characterized by** the further steps of

    - treating the quantity signal (MS) such that the quantity signal is reduced when a zero signal is generated,
    - determining a lower indication limit (AG) from the calculated signal dithering,
    - indicating a leak only if the quantity signal (MS) exceeds the lower indication limit (AG).

2.  The leak detection method of claim 1, wherein the calculation of the signal dithering ($\frac{dQ}{dt}$) is effected by obtaining the differential of the quantity signal (MS).

3.  The leak detection method of claim 1 or 2, wherein the signal dithering is divided by a quotient (k) to obtain the indication limit (AG).

4.  The leak detection method of one of claims 1 to 3, wherein the maximum value of leak rate (Q) and indication limit (AG) is supplied to a leak rate display.

5.  A leak detector comprising a vacuum connection (11), a high vacuum pump device (13) connected to the vacuum connection, a tracer gas sensor (16) supplying a quantity signal (MS), and a differential circuit (34) generating a signal dithering value from the quantity signal,
    **characterized in that**
    the leak detector comprises a microcomputer (17) and a control device (18) including a display device (19) and an input device (21) for a zero signal for reducing the quantity signal supplied by the tracer gas sensor,
wherein a lower indication limit (AG) is calculated from the signal dithering value, and the display device (19) comprises a maximum value selector (30) that selects a maximum value from the reduced quantity signal (MS) and the indication limit (AG), said display device (19) only indicating a leak rate differing from the indication limit if the reduced quantity signal (MS) exceeds the indication limit (AG).

**Revendications**

1.  Procédé de détection de fuites, comprenant les étapes suivantes :

    - aspirer du gaz
    - constater la présence de gaz d'essai dans le gaz aspiré, et générer un signal de quantité (MS) correspondant au taux de fuite (Q) mesuré,
    - déterminer l'instabilité ($\frac{dQ}{dt}$) du signal de quantité
    en tant que dérivée du taux de fuite mesuré en fonction du temps,
    **caractérisé par** les étapes supplémentaires suivantes :
    - traitement du signal de quantité (MS) de façon que s'opère, à l'émission d'un signal zéro, une réduction du signal de quantité,
    - définition d'une limite d'affichage (AG) inférieure à l'aide de l'instabilité de signal déterminée,
    - affichage d'une fuite uniquement lorsque le signal de quantité (MS) dépasse la limite d'affichage (AG) inférieure.

2.  Procédé de détection de fuites selon la revendication 1, dans lequel la détermination de l'instabilité ($\frac{dQ}{dt}$) du signal s'opère par formation différentielle du signal de quantité (MS).

3.  Procédé de détection de fuites selon la revendication 1 ou 2, dans lequel l'instabilité du signal est divisée par un quotient (k) pour obtenir la limite d'affichage (AG).

4.  Procédé de détection de fuites selon l'une des revendications 1 à 3, dans lequel le maximum à partir du taux de fuite (Q) et de la limite d'affichage (AG) est acheminé à un affichage du taux de fuite.

5.  Appareil de détection de fuites comprenant un raccord de vide (11), un dispositif de pompage à vide poussé (13) relié au raccord de vide, un capteur de gaz de contrôle (16) qui fournit un signal de quantité (MS), et un circuit différentiel (34) qui délivre une valeur d'instabilité de signal à partir du signal de quantité,

**caractérisé en ce que**

l'appareil de détection de fuites est pourvu d'un micro-ordinateur (17) et d'un dispositif de commande (18) qui contient un dispositif d'affichage (19) et un dispositif d'entrée (21) d'un signal zéro pour réduire le signal de quantité émis par le capteur de gaz de contrôle,

**caractérisé en ce que**

une limite d'affichage (AG) inférieure est déterminée à partir de la valeur d'instabilité de signal, et **en ce que** le dispositif d'affichage (19) contient un sélecteur de valeur maximale (30) qui sélectionne une valeur maximale à partir du signal de quantité (MS) réduit et de la limite d'affichage (AG), le dispositif d'affichage (19) n'indiquant un taux de fuite différent de la limite d'affichage que lorsque le signal de quantité (MS) réduit dépasse la limite d'affichage (AG).

**Fig.1**

**Fig.2**

**Fig.3**

**Fig.4**

**Fig.5**

EP 2 270 458 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0742429 A1
- US 5681983 A
- US 5786529 A
- JP 2003232826 A
- US 4369661 A

**In der Beschreibung aufgeführte Nicht-Patentliteratur**

- *PATENT ABSTRACTS OF JAPAN,* 05. Dezember 2003, vol. 2003, 12
- **ALKHIMOV DD et al.** Leak detector for fluid containers using test gas. *SU 905 685 A (AUTOM GAS ANALYSIS),* 15. Februar 1982